# EUROPÄISCHE PATENTSCHRIFT

(11) **EP 1 350 693 B1**
(45) Veröffentlichungstag und Bekanntmachung des Hinweises auf die Patenterteilung: **25.08.2004**
(21) Anmeldenummer: 03004132.1
(22) Anmeldetag: 26.02.2003
(51) Int. Cl.: B60R 21/34

(54) **Fronthaube mit aktiver Sicherheit**
Active safety bonnet
Capot moteur à sécurité active

(30) Priorität: 03.04.2002 DE 10214602
(43) Veröffentlichungstag der Anmeldung: 08.10.2003
(73) Patentinhaber: DaimlerChrysler AG, 70567 Stuttgart (DE)
(72) Erfinder: Baumann, Karl-Heinz, 71149 Bondorf (DE); Frank, Thomas, 70619 Stuttgart (DE); Michalak, Frank, 71120 Grafenau (DE); Rathje, Klaus, 71157 Hildrizhausen (DE)

(56) Entgegenhaltungen:
- WO-A-01/23225
- US-A1- 2002 017 409

## Beschreibung

Die Erfindung betrifft ein Stellglied für eine zum Fußgängerschutz aufstellbare Fronthaubenanordnung, durch welche die Fronthaubenanordnung von einer Ruheposition in eine Schutzposition überführt wird mit den Merkmalen des Oberbegriffs des Patentanspruchs 1. Ein solches Stellglied wird in der US2002/0017409A offenbart die auch dem Oberbegriff des unabhängigen Verfahrensanpruch 16 entspricht.

Derwei gehen viele Automobilhersteller den Weg einer entweder hinten und/oder vorn aufstellbaren Haube. Dabei gibt es viele Möglichkeiten für eine Auslösung einer solchen aktiven Fronthaube. Häufig ist eine Kontaktsensierung, d.h. eine Sensierung des Fußgängeranpralls im Bereich des Stoßfängers, vorgesehen, welche z.B. über eine Pyrotechnik einen Federspeicher entriegelt, wodurch die Haube in relativ kurzer Zeit in ihre Schutzposition überführt wird. Bei einer Kollision mit einem fußgängerähnlichen Hindernis, z.B. einem Fahrbahnbegrenzungspfosten, kann also auch eine Auslösung der aktiven Fronthaube stattfinden, ohne dass es zu einem Aufprall auf der Fronthaube kommt. Der Fahrer muss in einem solchen Fall aber dennoch die Werkstatt aufsuchen, um einerseits die Fronthaube zurückstellen zu lassen und andererseits die Pyrotechnik auswechseln zu lassen.

Weiterhin ist es bekannt, eine aktive Fronthaube mit mehreren, unterschiedlichen Auslösesystemen zu versehen. Dazu wird beispielhaft auf die DE 197 21 565 A1 verwiesen, die eine Sicherheitseinrichtung an einem Fahrzeug zum Schutz von Fußgängern offenbart. Diese bekannte Sicherheitseinrichtung weist ein Stellglied zur Verstellung einer Fronthaube des Fahrzeugs aus einer Ruhe- in eine demgegenüber angehobenen Aufprallposition auf. Dieses Stellglied wirkt mit einem Schloss für die Fronthaube zusammen. In der Ruheposition ist die Fronthaube über ein Fronthaubenschloss verriegelt und über eine Fronthauben-Aufstellfeder zumindest teilweise öffenbar. Das Stellglied wirkt als Entriegelungsvorrichtung für das Schloss, so dass die Fronthaubenanordnung über eine Aufstellfeder in die Aufprallposition überführt wird, sobald das Stellglied aktiviert wird. Zur Unterstützung der Fronthauben-Aufstellfeder ist bei der bekannten Sicherheitsvorrichtung ein zusätzliches Auslösesystem in Form einer Treibladung vorgesehen, durch die ebenfalls eine Überführung der Fronthaube von einer Ruheposition in eine Aufprallposition erfolgen und mit der die Zeit für die Anhebung verkürzt werden kann. Welches Auslösesystem aktiviert wird, hängt von der Geschwindigkeit des Fahrzeugs ab. Bei geringerer Geschwindigkeit wird das Aufstellen nur durch die Aufstellfeder durchgeführt und bei größeren Geschwindigkeiten wird das Aufstellen ausschließlich in Verbindung mit der Treibladungseinrichtung vorgenommen.

Bei dieser Sicherheitsvorrichtung wird zum Aufstellen der Fronthaube das Fronthaubenschloss entriegelt. Damit die Fronthaube dennoch fixiert bleibt und sich nicht unkontrolliert öffnet, ist eine zusätzliche Begrenzungsvorrichtung vorgesehen. Eine solche zusätzliche Begrenzungsvorrichtung bedeutet zusätzlichen Herstellungs- und Montageaufwand.

Wenn das Aufstellen bei der bekannten Fronthaube über die Fronthauben-Aufstellfeder erfolgt und ein Fehlaufstellen stattfindet, d.h. wenn beispielsweise eine vorausschauende Sensorik eine mögliche Kollision mit einem Fußgänger erfasst, diese aber dann nicht stattfindet, so ist ein automatisches Zurückstellen der Fronthaube von der Aufprallposition in die Ruheposition nicht vorgesehen. Das Bedeutet für den Fahrzeugführer, dass er anhalten und aussteigen muss, um die Fronthaube wieder von Hand zu schließen. Somit ist das Aufstellen über die Fronthauben-Aufstellfeder nicht vollständig reversibel. Für das Zurückstellen ist entweder ein zusätzliches System notwendig oder es muss von Hand durchgeführt werden.

Wenn das Aufstellen der Fronthaube über die Treibladung erfolgt, ist ebenfalls kein automatisches Zurückstellen der Fronthaube von der Aufprallposition in die Ruheposition vorgesehen. Hinzu kommt, dass das Stellglied in einer Werkstatt ausgetauscht werden muss, damit eine neue Treibladung eingebaut wird.

Vor dem Hintergrund dieses Standes der Technik liegt der vorliegenden Erfindung die Aufgabe zugrunde, ein Stellglied bzw. ein Verfahren zum Ansteuern einer zum Fußgängerschutz aufstellbaren Fronthaubenanordnung zu schaffen, welches einfach herzustellen bzw. umzusetzen ist und gleichzeitig seine Anwendung komfortabler für einen Fahrzeugführer macht.

Diese Aufgabe wird erfindungsgemäß durch ein Stellglied mit den Merkmalen des Patentanspruchs 1 gelöst. Demnach zeichnet sich die Erfindung einerseits durch ein Stellglied aus, welches ein Gehäuse sowie ein relativ zu dem Gehäuse beweglich angeordnetes Stellelement, das mit der Fronthaubenanordnung zusammenwirkt, umfasst. Das Stellelement wird über mindestens einen Aktuator bewegt. Erfindungsgemäß ist ein erster reversibler Aktuator sowie mindestens ein weiterer Aktuator vorgesehen, der teilreversibel ist.

Wenn im Zusammenhang mit der Erfindung von reversiblen Aktuatoren bzw. reversiblen Vorgängen die Rede ist, so ist damit jeder Aktuator bzw. jeder Vorgang gemeint, der sich automatisch und autonom wieder in seine Ausgangslage zurück stellt. Wenn im Zusammenhang mit der Erfindung von teilreversiblen Aktuatoren bzw. Vorgängen die Rede ist, so ist damit jeder Aktuator bzw. jeder Vorgang gemeint, der nur mit Hilfe von Außen in seine Ausgangsposition zurückgestellt werden kann. Das letztere gilt unabhängig davon, ob nach dem Zurückstellen der Aktuator wieder einsetzbar ist bzw. ob man nach dem Zurückstellen den Vorgang noch einmal ablaufen lassen kann oder nicht.

Reversibel bedeutet demnach, dass man mit einem Aktuator die Fronthaubenanordnung von einer Ruheposition in eine Schutzposition und wieder zurück überführen kann. Teilreversibel bedeutet demnach, dass man mit einem Aktuator die Fronthaubenanordnung von einer Ruheposition in eine Schutzposition überführen kann und für das Zurückstellen einen weiteren Aktuator benötigt. Es ist denkbar, dass zum Zurückstellen der erste reversible Aktuator verwendet wird.

Die Erfindung bringt den Vorteil mit sich, dass sich bei einer Bewegung der Fronthaube, die durch den reversiblen Aktuator vorgenommen wird, die Fronthaube über denselben Aktuator auch wieder zurückstellen lässt. Das ist insbesondere dann von Vorteil, wenn es zu Fehlauslösungen kommt, d.h. wenn ein möglicher Aufprall erfasst wird, das Stellglied daraufhin aktiviert wird und dann kein Aufprall stattfindet.

Gemäß einer Ausführungsform ist der erste Aktuator als Elektromotor ausgeführt. Ein solcher Aktuator bringt den Vorteil mit sich, dass es sich um ein Standartbauteil handelt, was sich positiv auf die Kosten auswirkt. Hinzu kommt, dass der Elektromotor sowohl ein Bauteil in Bewegung versetzen es aber auch in der ausgelenkten Lage bzw. aufgestellten Position arretieren kann, so dass keine zusätzlichen Arretierungselemente vorgesehen sein müssen. Weiterhin handelt es sich bei einem Elektromotor um einen reversiblen Aktuator, so dass sich sowohl Aufstell- als auch Rückstellbewegungen des Stellelementes und somit der Fronthaubenanordnung realisieren lassen.

Der Elektromotor kann einen Schneckenantrieb antreiben, der wiederum in Wirkverbindung mit einer Gewindespindel steht, die mit dem Stellelement zusammenwirkt. Schneckenantrieb und Gewindespindel dienen dazu eine Rotationsbewegung des Motors in eine Translationsbewegung umzuwandeln. Dazu kann das Stellelement beispielsweise eine Bohrung mit einem Innengewinde aufweisen. Es ist aber auch denkbar, dass jegliche anderen bekannten Elemente zur Übertragung der Bewegung von dem Motor auf das Stellelement eingesetzt werden. Eine solche hinlänglich bekannte Antriebseinheit, die aus einfachen Bauteilen besteht, trägt dazu bei, dass das Stellglied einfach herzustellen ist.

Bei dem Stellelement kann es sich um einen in dem Gehäuse beweglich, insbesondere translatorisch, gelagerten Kolben handeln.

Der weitere teilreversible Aktuator kann ein pyrotechnischer Aktuator sein. Bei einem solchen Aktuator handelt es sich ebenfalls um ein hinlänglich bekanntes Element, welches vielfältigen Einsatz in der Automobilindustrie genießt, so dass die Kosten für ein solchen Aktuator überschaubar sind. Weiterhin bringt ein pyrotechnischer Aktuator den Vorteil mit sich, dass man eine Aufstellung sehr schnell realisieren kann. In ca. 30 bis 60 ms ist es möglich einen pyrotechnischen Aktuator zu aktivieren und eine Aufstellbewegung der Fronthaube umzusetzen. Es ist aber auch denkbar, anstelle des pyrotechnischen Aktuators einen Federspeicher zu verwenden. Auch über ein solches Element ist eine sehr schnelle Bewegung zu erzeugen. Es bringt zudem den Vorteil mit sich, das man es nach erfolgter Auslösung erneut vorspannen und weiterverwenden kann.

Damit die durch den pyrotechnischen Aktuator bei einem Auslösefall erzeugte Energie in Bewegungsenergie umgesetzt wird, kann das kolbenförmige Stellelement hohl ausgeführt sowie mit einem darin beweglich angeordneten Stempel versehen sein. Wenn die durch den pyrotechnischen Aktuator erzeugte Druckwelle in den Hohlraum des Stellelements geleitet wird, kann darüber eine Bewegung des Stempels hervorgerufen werden. Der Stempel wirkt ebenso wie das Stellelement selber mit der Fronthaubenanordnung zusammen, so dass eine Bewegung des Stempels mit einer Bewegung der Fronthaubenanordnung einher geht.

Der Kolben kann zumindest teilweise nachgiebig gestaltet sein, so dass bei aufgestellter Fronthaube keine starre Verbindung zum Fahrzeug besteht. Diese konstruktive Ausgestaltung ermöglicht es, mit Hilfe des erfindungsgemäßen Stellgliedes Aufprallenergie, die bei einer Kollision des Fußgängers mit der Fronthaubenanordnung in diese eingeleitet wird, zu absorbieren. Die nachgiebige Gestalt kann beispielsweise durch eine faltenbalgartige Gestaltung zumindest eines Wandbereichs des Kolbens erfolgen. Die Energieaufnahme kann jedoch auch durch eine Steuerung des Gasdrucks auf andere Weise erfolgen, beispielsweise über gezielt eingebrachte und/oder in der Größe veränderbare Abblasöffnungen bzw. gesteuerte Drossel.

Das Stellelement kann aber auch fest in dem Gehäuse angeordnet sein und sich aufgrund der mittels des pyrotechnischen Aktuators erzeugten Druckwelle verlängern. Das ist beispielsweise durch eine faltenartige Struktur der Randbereiche des Stellgliedes möglich, die sich bei Erhöhung des Drucks in dem Stellglied entfalten, so dass das Stellglied beim Entfalten ausgefahren wird. Auch bei dieser Ausführungsform kann im ausgefahrenen Zustand über sich deformierenden Wandbereiche des Stellgliedes Aufprallenergie absorbiert werden. Das kann beispielsweise durch einen Kolben in Form eines Stülprohres erfolgen, welches beim Entfalten durch rollende Biegung verlängert wird. In diesem Fall sind die nachgiebigen Bereiche des Kolbens mit seiner Funktion als Stellelement kombiniert. Es wird also auch hier keine starre Verbindung zwischen Fronthaube und Fahrzeug hergestellt.

Wenn Anstelle des pyrotechnischen Aktuators eine vorgespannte Feder verwendet wird, kann diese in ihrer entspannten Position, d.h. wenn die Fronthaubenanordnung die Schutzposition einnimmt ebenfalls Aufprallenergie aufnehmen und die Kollision des Fußgängers mit der Fronthaube dämpfen.

Das erfindungsgemäße Stellglied kann im Bereich des Fronthaubenschlosses angeordnet sein. Dabei ist sogar denkbar, dass es mit dem Fronthaubenschloss oder dem Fronthaubenbügel verbunden ist, welcher in das Fronthaubenschloss eingreift. Wichtig ist dass das Fronthaubenschloss über die gesamte Phase der Überführung der Fronthaubenanordnung von ihrer Ruheposition in ihre Schutzposition geschlossen bleibt. In diesem Zusammenhang ist es unerheblich, ob das Stellglied fronthaubenseitig oder fahrzeugseitig angeordnet ist. Beide Varianten sind möglich. Das Stellglied kann sowohl an der dem Fahrgastraum zugewandten als auch an dem abgewandten Ende der Fronthaubenanordnung vorgesehen sein, so dass es sich sowohl für vorne als auch hinten aufstellbare Fronthauben einsetzen lässt. Selbstverständlich ist es auch möglich das erfindungsgemäße Stellglied vorne und hinten vorzusehen und darüber die gesamte Fronthaube anzuheben.

Die oben aufgeführte Aufgabe wird erfindungsgemäß auch durch ein Verfahren zum Ansteuern einer zum Fußgängerschutz aufstellbaren Fronthaubenanordnung mit den Merkmalen des Patentanspruchs 16 gelöst. Gemäß dieser Merkmalskombination zeichnet sich das Verfahren dadurch aus, dass zunächst Signale über verschiedene Sensorsysteme erfasst werden, diese dann ausgewertet und anschließend an ein Stellglied, welches eine Fronthaubenanordnung von einer Ruheposition in eine Schutzposition überführt, weitergeleitet werden. Je nachdem, ob ein tatsächlicher oder nur ein wahrscheinlicher Anprall erfasst wird, wird eine andere Art der Überführung der Fronthaubehaube gewählt. Wenn ein möglicher Anprall sensiert wird, so wird das Stellglied eine reversible Überführung der Fronthaubenanordnung in eine Schutzposition vornehmen. Wird jedoch ein tatsächlicher Anprall sensiert, so erfolgt eine teilreversible Überführung der Fronthaubenanordnung in eine Schutzposition.

Die Sensierung eines möglichen Anpralls kann beispielsweise mit einer Nahfeldsensorik erfolgen. Wenn im Zusammenhang mit der Erfindung von Nahfeldsensorik die Rede ist, so ist damit eine Sensorik gemeint, die es erlaubt in einem Bereich von ca. 6 bis 10 m vor dem Fahrzeug bzw. um das Fahrzeug herum in einem relevanten Geschwindigkeitsbereich von ca. 15 bis 50 km/h Hindernisse zu erkennen, mit denen eine Kollision wahrscheinlich ist. Für ein Anheben der Fronthaube steht in diesem Fall ein Zeitraum von ca. 300 bis 600 ms zur Verfügung. Die Detektierung eines tatsächlichen Anpralls kann beispielsweise durch eine Kontaktsensorik erfolgen. Mit Kontaktsensorik ist im Zusammenhang mit dem erfindungsgemäßen Verfahren eine Sensorik gemeint, die eine Berührung des Fahrzeugs mit einem Hindernis - hier einem Fußgänger - detektiert.

Es gibt Situationen, die von der Nahfeldsensorik nicht wahrgenommen werden können. Aus diesem Grund ist es sinnvoll ein ergänzendes Sensorsystem vorzusehen. In einem solchen Fall muss die Fronthaubenanordnung jedoch wesentlich schneller aufgestellt werden, so dass eine andere Art der Überführung gewählt werden muss. Erfindungsgemäß erfolgt die teilreversible Überführung in ca. 30 bis 60 ms.

Wenn nach einer erfolgten reversiblen Überführung der Fronthaube in ihre Schutzposition keine Kollision mit einem Fußgänger erfolgt, dann wird die Fronthaubenanordnung automatisch zurückgestellt. Das Rückstellen erfolgt nach einer vorbestimmten Zeit - als Beispiel seien hier ca. 5 s genannt. Der Fahrer nimmt - insbesondere bei kleinen Aufstellwegen-in einem solchen Fall die Auf- und Abbewegung der Fronthaube nicht wahr.

Da bei einer guten Sensorik in den meisten Fällen, in denen es zu einer Kollision kommt, zuvor eine präventive Aktivierung über eine Nahfeldsensorik erfolgt ist, wird eine Aktivierung der teilreversiblen Überführung unterdrückt. Die Gefahr von ungewollten pyrotechnischen Aktivierungen, die zu einem Werkstattaufenthalt führen könnten, können dadurch erheblich reduziert werden.

Ein weiterer Vorteil des erfindungsgemäßen Verfahrens, dass sich durch eine Kombination einer reversiblen und einer teilreversiblen Überführung auszeichnet, ist darin zu sehen, dass nach einer teilreversiblen Überführung die Vorrichtung für die reversible Auslösung verwendet werden kann, um die Fronthaubenanordnung von der Schutzposition zurück in die Ruheposition zu verfahren. Das kann beispielsweise dann von Vorteil sein, wenn eine Auslösung stattgefunden hat und man das Fahrzeug anschließend in eine Werkstatt bringen möchte, um den Aktuator für die teilreversible Überführung auszuwechseln.

Im folgenden wird die Erfindung anhand den in den Zeichnungen dargestellten Ausführungsbeispielen näher erläutert. Dabei zeigen:
- Fig. 1: einen Längsschnitt durch eine Fronthaubenanordnung mit einem erfindungsgemäßen Stellglied;
- Fig. 2: eine Detailansicht des erfindungsgemäßen Stellglieds gemäß Fig. 1 in drei verschiedenen Positionen sowie
- Fig. 3: eine Detailansicht einer weiteren Ausführungsform des erfindungsgemäßen Stellglieds in drei verschiedenen Positionen.

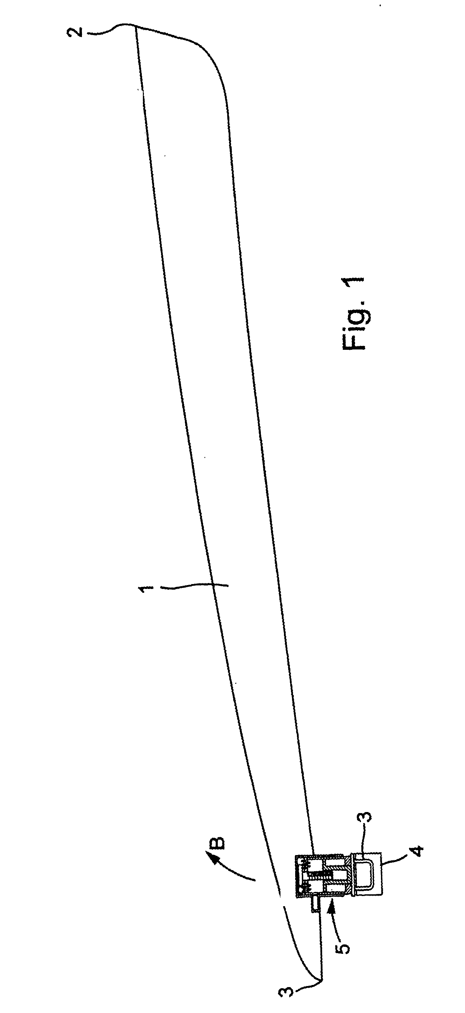

In Fig. 1 ist eine Fronthaube 1 eines Personenkraftwagens dargestellt. Die Fronthaube 1 ist an ihrem der Fahrgastzelle zugewandten Ende 2 in bekannter Weise über nicht dargestellte Scharniere mit dem Fahrzeug schwenkbar verbunden. An ihrem der Fahrgastzelle abgewandten Ende 3 ist ein schematisch dargestelltes Schloss 4 vorgesehen, in welches ein Fronthaubenbügel 5 eingreift. Der Fronthaubenbügel 5 ist nicht direkt mit der Fronthaube 1 sondern über ein Stellglied 6 mit dieser verbunden. Mit Hilfe dieses Stellgliedes 6 kann die Fronthaube 1 bei geschlossenen Schloss 4 an ihrem vorderen Ende 3 angehoben und um die nicht dargestellten Scharniere geschwenkt werden. Auf diese Weise wird der Abstand zwischen Fronthaube 1 und den darunter angeordneten Motorraum-Aggregaten, vergrößert, wodurch die Verletzungsgefahr von mit der Fronthaube kollidierenden Fußgängern erheblich verringert wird.

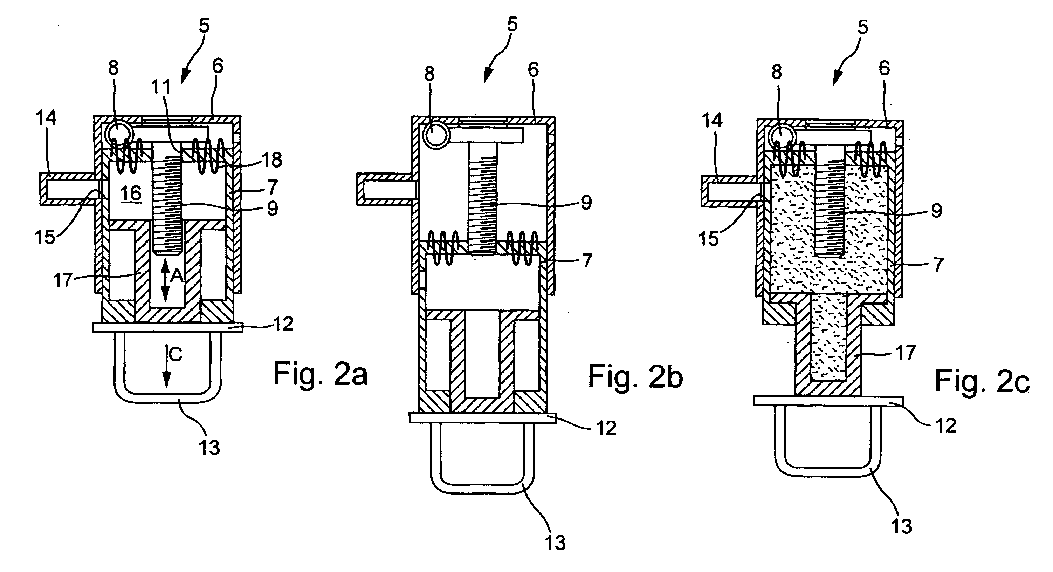

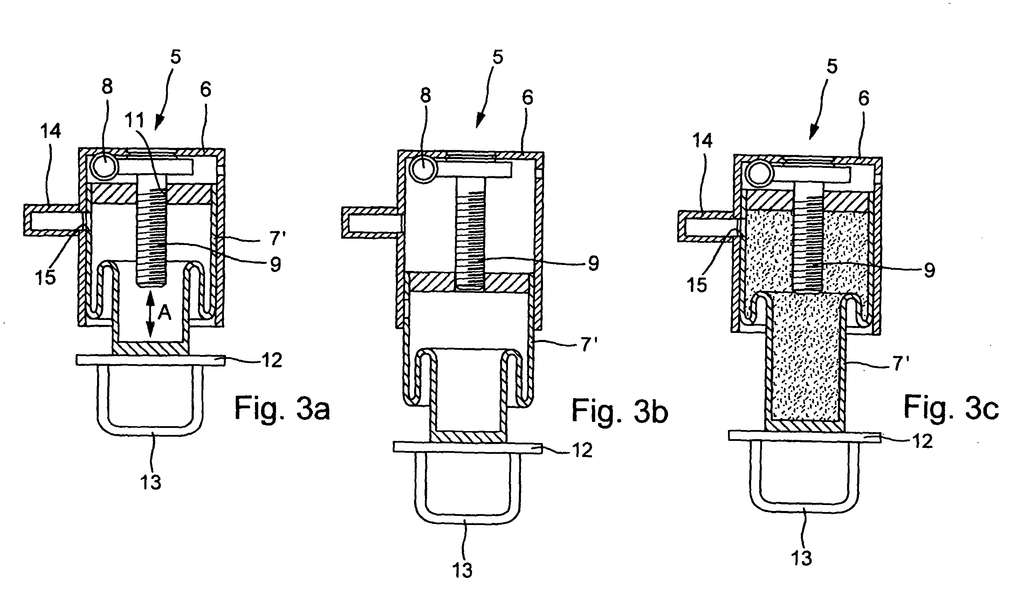

Der Aufbau und die Funktion des erfindungsgemäßen Stellglieds 5 wird nun anhand der Fig. 2 und 3 näher erläutert. Das in Fig. 2 dargestellte Stellglied 5 umfasst ein Gehäuse 6. In dem Gehäuse 6 ist ein Kolben 7 angeordnet. Der Kolben 7 ist beweglich in dem Gehäuse 6 gelagert. Als Antrieb für die Bewegung des Kolbens 7 in dem Gehäuse 6 ist ein nicht dargestellter Elektromotor vorgesehen, der mit einem Schneckenantrieb 8 zusammenwirkt. Der Schneckenantrieb 8 versetzt eine Gewindespindel 9 in Rotation. Die Gewindespindel 8 greift in eine mit einem Innengewinde versehene Bohrung 11 des Kolbens 7 ein. Eine Drehung der Gewindespindel 9 bewirkt eine Bewegung des Kolbens 7 in dem Gehäuse 6 in Richtung des Doppelpfeils A. Der Kolben 8 kann in dem Gehäuse 6 also nach oben und nach unten bewegt werden.

An dem nach unten weisenden Ende des Gehäuses 6, an dem Kolben 7 anliegend, ist eine Montageplatte 12 vorgesehen, an der ein Bügel 13 befestigt ist. Der Bügel 13 wirkt mit dem Fronthaubenschloss 4 zusammen. In geschlossenem Zustand der Fronthaubenanordnung greift der Bügel 13 in das Fronthaubenschloss 4 ein und wird dort arretiert. Beim Öffnen der Fronthaube 1 und Aufschwenken, um beispielsweise irgendwelche Arbeiten im Motorraum vorzunehmen, wird die Arretierung gelöst und ein Entfernen des Bügels 13 aus dem Schloss 4 ermöglicht.

Wenn nun beispielsweise über eine Nahfeldsensorik eine mögliche Kollision eines Fußgängers mit der Fronthaube 1 erfasst wird, so wird mit Hilfe des Elektromotors über den Schneckenantrieb 8 die Gewindespindel 9 in Rotation versetzt, so dass sich der Kolben 7 aus dem Gehäuse 5 heraus bewegt. Die ausgefahrene Position ist in Fig. 2b dargestellt. Wenn - wie in Fig. 1 dargestellt - das erfindungsgemäße Stellglied frontseitig angeordnet ist und der Bügel 13 in das Fronthaubenschloss 4 eingreift, vergrößert sich aufgrund der Bewegung des Kolbens 7 in dem Gehäuse 5 der Abstand zwischen dem vorderen Ende der Fronthaube 1 und dem darunter angeordneten Motorraum. Die Fronthaube wird in diesem Bereich im dargestellten Ausführungsbeispiel um ca. 25 mm angehoben. Die Fronthaube 1 wird dabei also um die nicht dargestellten Scharniere in Richtung des Pfeils B in eine Schutzposition verschwenkt. Der Bügel 13 bleibt dabei die ganze Zeit in Eingriff mit dem Schloss 4. Das verhindert ein ungewolltes Öffnen der Fronthaube 1.

Weil für den Antrieb des Kolbens 7 ein Elektromotor verwendet wird, lässt sich der Kolben 7 auf sehr einfache Art und Weise von der in Fig. 2b dargestellten ausgefahrenen Position in die in Fig. 2a dargestellten Ausgangsposition überführen. Die Gewindespindel 9 muss dazu nur in entgegengesetzte Richtung gedreht werden. Die beschriebene konstruktive Anordnung stellt somit eine einfache Möglichkeit für einen reversiblen Aktuator zum Überführen einer Fronthaube 1 in eine Schutzposition dar.

An dem Gehäuse 6 ist neben dem elektromechanischen Antrieb ein pyrotechnisch initiierter Antrieb vorgesehen. Dieser umfasst eine Treibladung 14. Der Kolben 7 ist hohl ausgeführt und weist eine Ausnehmung 15 auf. In der in Fig. 2a dargestellten Ausgangsposition ist die Ausnehmung 15 so angeordnet, dass sich die bei Zünden der Treibladung 14 entstehende Druckwelle in den Hohlraum 16 des Kolbens 7 entlädt.

In dem Hohlraum 16 ist ein beweglich gelagerter Stempel 17 angeordnet. In der Ausgangsposition ragt der Stempel 17 nicht über den Kolben 7 hinaus. Er ist also komplett in dem Kolben 7 angeordnet.

Wenn nun beispielsweise über eine Kontaktsensorik ein tatsächlicher Unfall erfasst wird, wird die Treibladung 14 gezündet und der dadurch entstehende Druck entweicht in den Kolben 7, woraufhin sich der Stempel 17 in Richtung des Pfeils C in Fig. 2a bewegt und die in Fig. 2c dargestellte Position einnimmt. Der Kolben 7 bleibt von dieser Bewegung unbeeinträchtigt. Die Montageplatte 12 ist mit dem Stempel 17 verbunden und wird aufgrund der Bewegung des Stempels 17 mit dem Bügel 13 ebenfalls in Richtung des Pfeils C bewegt. Ebenso wie bei der zuvor beschriebenen Aufstellung, die aufgrund des Elektromotors erfolgt, vergrößert sich durch die Bewegung des Stempels 17 in dem Kolben 7 der Abstand zwischen dem vorderen Ende der Fronthaube 1 und dem darunter angeordneten Motorraum. Die Fronthaube 1 wird dabei also um die nicht dargestellten Scharniere in Richtung des Pfeils B in eine Schutzposition verschwenkt. Der Bügel 13 bleibt dabei ebenfalls die ganze Zeit in Eingriff mit dem Schloss 4. Das verhindert ein ungewolltes Öffnen der Fronthaube 1 beim Aufstellvorgang zum Schutz von Fußgängern.

Dadurch, dass die Ausnehmung 15 nur dann der Treibladung 14 zugewandt ist, wenn der Kolben 7 seine Ausgangsposition einnimmt und somit der Kolben 7 auch nur dann mit einem Druck beaufschlagt werden kann, kann der Stempel 17 auch nur in dieser Situation aus dem Kolben heraus verfahren werden. In der in Fig. 2b dargestellten Position ist ein Verfahren des Stempels 17 aus diesem nicht möglich. Diese Anordnung bringt den Vorteil mit sich, dass nach Sensierung eines möglichen Unfalls und entsprechender Aufstellung der Fronthaube 1 mit Hilfe des reversiblen Aktuators keine zusätzliche Aktivierung des teilreversiblen Aktuators erfolgen muss, wenn ein tatsächlicher Unfall sensiert wird. Dadurch wird die Gefahr von ungewollten pyrotechnischen Aktivierungen, die zu einem Werkstattaufenthalt führen, erheblich reduziert.

An seiner nach oben weisenden Wandung weist der Kolben 7 nachgiebige Bereiche auf, die hier durch Schlangenlinien 18 symbolisiert sind. Diese nachgiebigen Bereiche, die beispielsweise als faltenbalgartige Gestaltung ausgeführt sein können - haben den Vorteil, dass insbesondere in der ausgefahrenen Stellung Energie beim Fußgängeraufprall über eine Steuerung des Gasdrucks erfolgen kann. Die Steuerung kann auch durch Abblasöffnungen erfolgen. Es wird beim Aufstellen der Haube also keine starre Verbindung erzeugt.

In den Fig. 3a bis 3c ist eine andere Ausführungsform eines erfindungsgemäßen Stellgliedes dargestellt. Diese Ausführungsform unterscheidet sich von der zuvor beschriebenen Ausführungsform dadurch, dass der Kolben 7' keinen darin beweglich angeordneten Stempel aufweist. Vielmehr weist er zwei Bereiche mit unterschiedlichen Durchmessern auf, einen nach oben gewandten Bereich, der in dem Gehäuse 6 angeordnet ist und einen nach unten, in Richtung Bügel 13 gewandten und mit dem Bügel 13 über eine Montageplatte 12 verbundenen Bereich. Der nach oben weisende Bereich des Kolbens 7' hat einen größeren Durchmesser als der nach unten weisende Bereich. Der Übergang zwischen diesen Bereichen erfolgt durch eine Faltung des Materials, so dass sich die beiden Bereiche mit den unterschiedlichen Durchmessern überlappen. Der Kolben 7' hat demnach die Form eines Stülprohres.

Die elektromechanische Aktuatorik ist in diesem Ausführungsbeispiel dieselbe, wie die bei dem zuvor beschriebenen Ausführungsbeispiel. Sie erfolgt über eine Gewindespindel 9, die über ein Schneckenantrieb 8 von einem nicht dargestellten Elektromotor angetrieben wird. Bei der Aktivierung des Stellgliedes 5 mittels dieser Aktuatorik wird der gesamte Kolben 7' aus dem Gehäuse 6 herausgeschoben.

Kommt es zu einer Aktivierung der Fronthaube 1 durch den teilreversiblen Aktuator, so wird ebenfalls die Treibladung 14 gezündet und der dadurch entstehende Druck in den Kolben 7' geleitet. Der Druck bewirkt nun ein Längen des Kolbens 7' durch ein Entfalten des Übergangsbereichs mittels Rollbiegung. Die Montageplatte 12 wird aufgrund des Ausdehnens des Kolbens 7' mit dem Bügel 13 ebenfalls in Richtung des Pfeils C bewegt. Ebenso wie bei der Aufstellung, die aufgrund des Elektromotors erfolgt, vergrößert sich dadurch der Abstand zwischen dem vorderen Ende der Fronthaube 1 und dem darunter angeordneten Motorraum. Die Fronthaube 1 wird dabei also um die nicht dargestellten Scharniere in Richtung des Pfeils B in eine Schutzposition verschwenkt. Der Bügel 13 bleibt dabei ebenfalls die ganze Zeit in Eingriff mit dem Schloss 4. Das verhindert ein ungewolltes Öffnen der Fronthaube 1.

Eine Aufnahme von Aufprallenergie ist in dieser Ausführungsform durch die Gestaltung des Kolbens 7' als Stülprohr ermöglicht. Wenn in der in Fig. 3c dargestellten ausgefahrenen Position des Kolbens 7' eine Kraft auf die Fronthaube 1 gegeben wird, so kann das Stülprohr 7' über seine Wandbereiche, die einer rollenden Biegung unterzogen werden, Aufprallenergieabsorbieren. Auch bei diesem Ausführungsbeispiel wird als keine starre Verbindung zwischen Fronthaube 1 und Motorraum geschaffen.

## Patentansprüche

1. Stellglied für eine zum Fußgängerschutz aufstellbare Fronthaubenanordnung, durch welches die Fronthaubenanordnung von einer Ruheposition in eine Schutzposition überführt wird, mit
- einem Gehäuse (6),
- einem relativ zu dem Gehäuse (6) beweglich angeordneten und mit der Fronthaubenanordnung zusammenwirkenden Stellelement (7,7') sowie
- einem ersten reversiblen Aktuator (8, 9, 11) zum Bewegen des Stellelementes (7,7'),
**dadurch gekennzeichnet,**
**dass** mindestens ein weiterer Aktuator (14) vorgesehen ist, der zumindest teilreversibel ist.

2. Stellglied nach Anspruch 1
**dadurch gekennzeichnet,**
**dass** der erste Aktuator ein Elektromotor ist.

3. Stellglied nach Anspruch 2
**dadurch gekennzeichnet,**
**dass** der Elektromotor mit einem Schneckenantrieb (8) verbunden ist.

4. Stellglied nach Anspruch 3
**dadurch gekennzeichnet,**
**dass** der Schneckenantrieb (8) eine Gewindespindel (9) antreibt.

5. Stellglied nach Anspruch 4,
**dadurch gekennzeichnet,**
**dass** die Gewindespindel (9) mit einem Innengewinde (11) des Stellelementes zusammenwirkt.

6. Stellglied nach einem der Ansprüche 1 bis 5,
**dadurch gekennzeichnet,**
**dass** das Stellelement ein in dem Gehäuse (6) verschiebbar gelagerter Kolben (7, 7') ist.

7. Stellglied nach einem der Ansprüche 1 bis 6,
**dadurch gekennzeichnet,**
**dass** der weitere Aktuator eine pyrotechnische Auslöseeinheit (14) umfasst.

8. Stellglied nach einem der Ansprüche 1 bis 7,
**dadurch gekennzeichnet,**
**dass** der Kolben (7, 7') hohl ausgeführt ist.

9. Stellglied nach Anspruch 8,
**dadurch gekennzeichnet,**
**dass** in dem Kolben (7, 7') ein Stempel (17) beweglich gelagert ist.

10. Stellglied nach Anspruch 9,
**dadurch gekennzeichnet,**
**dass** der Stempel (17) durch eine Aktivierung der pyrotechnischen Auslöseeinheit (14) in dem Kolben (7, 7') bewegt wird.

11. Stellglied nach einem der Ansprüche 1 bis 10,
**dadurch gekennzeichnet,**
**dass** der Kolben (7, 7') zumindest teilweise nachgiebig gestaltet ist.

12. Stellglied nach Anspruch 11
**dadurch gekennzeichnet,**
**dass** ein Wandbereich des Kolbens (7, 7') eine faltenbalgartige Gestaltung (18) aufweist.

13. Stellglied nach Anspruch 11,
**dadurch gekennzeichnet,**
**dass** der Kolben (7') ein Stülprohr ist.

14. Stellglied nach einem der Ansprüche 1 bis 13,
**dadurch gekennzeichnet,**
**dass** es fronthaubenseitig oder fahrzeugseitig angeordnet ist.

15. Stellglied nach einem der Ansprüche 1 bis 14,
**dadurch gekennzeichnet,**
**dass** es an dem von einer Fahrgastzelle abgewandten und/oder an dem der Fahrgastzelle zugewandten Ende der Fronthaube (1) angeordnet ist.

16. Verfahren zum Ansteuern einer zum Fußgängerschutz aufstellbaren Fronthaubenanordnung mit einem ansteuerbaren Stellglied, durch welches die Fronthaubenanordnung von einer Ruheposition in eine Schutzposition überführt wird, bei dem Signale über verschiedene Sensorsysteme aufgenommen, ausgewertet und an das Stellglied weitergeleitet werden,
**dadurch gekennzeichnet,**
**dass** wenn ein möglicher Anprall sensiert wird, durch das Stellglied eine reversible Überführung der Fronthaubenanordnung in eine Schutzposition erfolgt und wenn ein tatsächlicher Anprall sensiert wird, durch das Stellglied eine teilreversible Überführung der Fronthaubenanordnung erfolgt.

17. Verfahren nach Anspruch 16,
**dadurch gekennzeichnet,**
**dass** die teilreversible Überführung schnell erfolgt.

18. Verfahren nach Anspruch 17,
**dadurch gekennzeichnet,**
**dass** die teilreversible Überführung innerhalb von 30-60 ms erfolgt.

19. Verfahren nach einem der Ansprüche 16 bis 18,
**dadurch gekennzeichnet,**
**dass** wenn nach einer reversiblen Überführung kein Anprall erfolgt, ein Rückstellen der Fronthaubenanordnung nach einer vorbestimmten Zeit erfolgt.

20. Verfahren nach Anspruch 16,
**dadurch gekennzeichnet,**
**dass** nach einer erfolgten reversiblen Überführung keine zusätzliche Aktivierung für eine teilreversible Überführung erfolgt.

21. Verfahren nach Anspruch 16,
**dadurch gekennzeichnet,**
**dass** nach einer erfolgten teilreversiblen Überführung ein Rückstellen der Fronthaubenanordnung in die Ruheposition über ein von der teilreversiblen Überführung unabhängiges System erfolgt.

22. Verfahren nach Anspruch 21,
**dadurch gekennzeichnet,**
**dass** es sich bei dem unabhängigen System um das die reversible Überführung umsetzende System handelt.

## Claims

1. Control member for a front bonnet arrangement which can be set up for pedestrian protection, by means of which the front bonnet arrangement is transferred from a rest position into a protection position, comprising
- a housing (6),
- a control element (7, 7') movably arranged relative to the housing (6) and cooperating with the front bonnet arrangement and
- a first reversible actuator (8, 9, 11) for moving the control element (7, 7'),
**characterised in that** at least one further actuator (14) is provided which is at least partially reversible.

2. Control member according to claim 1, **characterised in that** the first actuator is an electric motor.

3. Control member according to claim 2, **characterised in that** the electric motor is connected to a worm drive (8).

4. Control member according to claim 3, **characterised in that** the worm drive (8) drives a threaded spindle (9).

5. Control member according to claim 4, **characterised in that** the threaded spindle (9) cooperates with an internal thread (11) of the control element.

6. Control member according to any one of claims 1 to 5, **characterised in that** the control element is a piston (7, 7') displaceably mounted in the housing (6).

7. Control member according to any one of claims 1 to 6, **characterised in that** the further actuator comprises a pyrotechnic trigger unit (14).

8. Control member according to any one of claims 1 to 7, **characterised in that** the piston (7, 7') is hollow in design.

9. Control member according to claim 8, **characterised in that** a plunger (17) is movably mounted in the piston (7, 7').

10. Control member according to claim 9, **characterised in that** the plunger (17) is moved by an activation of the pyrotechnic trigger unit (14) in the piston (7, 7').

11. Control member according to any one of claims 1 to 10, **characterised in that** the piston (7, 7') is at least partly resilient in design.

12. Control member according to claim 11, **characterised in that** a wall region of the piston (7, 7') has a bellows-like design (18).

13. Control member according to claim 11, **characterised in that** the piston (7') is a collapsing tube.

14. Control member according to any one of claims 1 to 13, **characterised in that** it is arranged on the front bonnet side or the vehicle side.

15. Control member according to any one of claims 1 to 14, **characterised in that** it is arranged on the end of the front bonnet (1) remote from the occupant cell and/or on the end facing the occupant cell.

16. Method for controlling a front bonnet arrangement which can be set up for pedestrian protection with a controllable control member, by which the front bonnet arrangement is transferred from a rest position into a protection position, in which signals are received via various sensor systems, evaluated and passed to the control member, **characterised in that** when a possible impact is detected, a reversible transfer of the front bonnet arrangement into its protection position takes place owing to the control member and if an actual impact is detected, a reversible transfer of the front bonnet arrangement takes place owing to the control member.

17. Method according to claim 16, **characterised in that** the reversible transfer takes place rapidly.

18. Method according to claim 17, **characterised in that** the partially reversible transfer takes place within 30 to 60 ms.

19. Method according to any one of claims 16 to 18, **characterised in that** when there is no impact after a reversible transfer, the front bonnet arrangement is reset after a predetermined time.

20. Method according to claim 16, **characterised in that** after a reversible transfer has taken place, no additional activation takes place for a partially reversible transfer.

21. Method according to claim 16, **characterised in that** after a partially reversible transfer has taken place, the front bonnet arrangement is reset into the rest position via a system which is independent of the partially reversible transfer.

22. Method according to claim 21, **characterised in that** the independent system is the system implementing the reversible transfer.

## Revendications

1. Organe de commande destiné à un capot avant pouvant être redressé en vue de la protection des piétons, au moyen duquel ledit capot se déplace depuis une position de repos en une position de protection, avec
- un carter (6),
- un élément de réglage (7, 7') à position mobile par rapport au carter (6) et agissant conjointement avec le capot avant, et
- un premier actionneur réversible (8, 9, 11) destiné au déplacement de l'élément de réglage (7, 7'),
**caractérisé en ce qu'**un premier actionneur réversible est prévu, et qu'un autre actionneur (14) au moins est prévu, lequel est partiellement réversible au moins.

2. Organe de commande selon la revendication 1, **caractérisé en ce que** le premier actionneur est un moteur électrique.

3. Organe de commande selon la revendication 2, **caractérisé en ce que** le moteur électrique est relié à une transmission à vis sans fin (8).

4. Organe de commande selon la revendication 3, **caractérisé en ce que** la transmission à vis sans fin (8) commande une broche filetée (9).

5. Organe de commande selon la revendication 4, **caractérisé en ce que** la broche filetée (9) et un taraudage (11) de l'élément de réglage agissent conjointement.

6. Organe de commande selon l'une quelconque des revendications 1 à 5, **caractérisé en ce que** l'élément de réglage représente un piston (7, 7') logé en translation dans le carter (6).

7. Organe de commande selon l'une quelconque des revendications 1 à 6, **caractérisé en ce que** l'autre actionneur comprend une unité de déclenchement pyrotechnique (14).

8. Organe de commande selon l'une quelconque des revendications 1 à 7, **caractérisé en ce que** le piston (7, 7') est creux.

9. Organe de commande selon la revendication 8, **caractérisé en ce qu'**un plongeur (17) est logé de façon mobile dans le piston (7, 7').

10. Organe de commande selon la revendication 9, **caractérisé en ce que** le plongeur (17) est déplacé dans le piston (7, 7') par une activation de l'unité de déclenchement pyrotechnique (14).

11. Organe de commande selon l'une quelconque des revendications 1 à 10, **caractérisé en ce que** le piston (7, 7') est réalisé de manière souple, partiellement du moins.

12. Organe de commande selon la revendication 11, **caractérisé en ce qu'**un secteur de la paroi du piston (7, 7') comporte une configuration en forme de soufflet (18.

13. Organe de commande selon la revendication 11, **caractérisé en ce que** le piston (7') représente un tube de recouvrement.

14. Organe de commande selon l'une quelconque des revendications 1 à 13, **caractérisé en ce que** ledit organe de commande est disposé du côté du capot avant ou du côté du véhicule.

15. Organe de commande selon l'une quelconque des revendications 1 à 14, **caractérisé en ce que** ledit organe de commande est installé à l'extrémité du capot avant (1), au côté opposé à un habitacle, et/ou à l'extrémité dudit capot avant, en face de l'habitacle.

16. Procédé destiné à la commande d'un capot avant pouvant être redressé en vue de la protection des piétons, avec un organe de commande pouvant être amorcé et au moyen duquel le capot se déplace depuis une position de repos en une position de protection, ledit procédé permettant le captage et l'analyse de signaux au moyen de différents systèmes de capteurs, et la transmission de ces signaux à l'organe de commande, **caractérisé en ce qu'**un déplacement réversible du capot avant en une position de protection est effectué, si une collision possible est captée et, si une collision réelle est captée, l'organe de commande ordonne un déplacement partiellement réversible dudit capot avant.

17. Procédé selon la revendication 16, **caractérisé en ce que** le déplacement partiellement réversible se fait rapidement.

18. Procédé selon la revendication 17, **caractérisé en ce que** le déplacement partiellement réversible se fait en l'espace de 30-60 ms.

19. Procédé selon l'une quelconque des revendications 16 à 18, **caractérisé en ce qu'**un rappel du capot avant a lieu à la suite d'une durée prédéterminée, s'il n'y pas de collision suite au déplacement réversible.

20. Procédé selon la revendication 16, **caractérisé en ce qu'**à la suite d'un déplacement réversible, il n'y a pas d'activation complémentaire en vue d'un déplacement partiellement réversible.

21. Procédé selon la revendication 16, **caractérisé en ce qu'**à la suite d'un déplacement partiellement réversible, il y a lieu à un retour du capot avant en position de repos, par l'intermédiaire d'un système indépendant du déplacement partiellement réversible.

22. Procédé selon la revendication 21, **caractérisé en ce que** le système indépendant constitue le système ordonnant le déplacement réversible.
